# EUROPÄISCHE PATENTANMELDUNG

(11) **EP 2 927 529 A1**
(43) Veröffentlichungstag der Anmeldung: **07.10.2015**
(21) Anmeldenummer: 15001131.0
(22) Anmeldetag: 01.12.2010
(51) Int. Cl.: F16D 63/00, H02K 7/10, B60K 7/00

(54) **RADNABENANTRIEBSEINHEIT**

(30) Priorität: 07.12.2009 DE 102009057320
(62) Teilanmeldung aus: 10785423.4
(71) Anmelder: Schaeffler Technologies AG & Co. KG, 91074 Herzogenaurach (DE)
(72) Erfinder: Fischer, Raphael, 91074 Herzogenaurach (DE); Bogner, Michael, 90542 Eckental (DE)

(57) **Zusammenfassung**

Radnabenantriebseinheit zum Antreiben eines Fahrzeugrades eines Kraftfahrzeuges, umfassend einen Radnabenantrieb, welcher ein Lagerelement (14) aufweist, über welches der Radnabenantrieb an einer Radnabe (20) des Kraftfahrzeuges angeordnet ist, wobei der Radnabenantrieb ein mechanisch ausgebildetes Sperrelement (40) zur Aufbringung einer Bremskraft auf die Radnabe aufweist.

## Beschreibung

Die Erfindung betrifft eine Radnabenantriebseinheit zum Antreiben eines Fahrzeugrades eines Kraftfahrzeuges mit einem Radnabenantrieb.

Ein Radnabenantrieb ist üblicherweise unmittelbar an einem Fahrzeugrad eines Kraftfahrzeuges angeordnet bzw. innerhalb des Fahrzeugrades integriert. Ein Radnabenantrieb weist meist eine Motoreinheit auf, über welche die Radnabe und damit das Fahrzeugrad des Kraftfahrzeuges angetrieben werden kann. Ein derartiger Radnabenantrieb bzw. eine derartige Radnabenantriebseinheit wird vorzugsweise für Elektrofahrzeuge verwendet. Problematisch bei derartigen Radnabenantriebseinheiten, insbesondere bei der Verwendung in Elektrofahrzeugen ist die Ausgestaltung einer Berganfahrhilfe bzw. Berganfahrassistenten, mittels welchem eine automatisierte Unterstützung für das Kraftfahrzeug beim Anfahren an Steigungen ermöglicht ist und ein Zurückrollen des Kraftfahrzeuges an der Steigung verhindert wird. Eine derartige Berganfahrhilfe erfolgt üblicherweise über eine Bremsanlage des Kraftfahrzeuges, wobei durch den Fahrer selbst kein Betätigen und/oder Lösen der Bremsanlage, insbesondere einer Betriebs- oder Feststellbremsanlage des Kraftfahrzeuges, erfolgen muss. Die Ansteuerung der Bremsanlage bzw. der Bremsen der Bremsanlage erfolgt dabei meist softwaregesteuert. Dies bedingt aufwändige Algorithmen, da die Gaspedalstellung bzw. die Motordrehzahl, der Kupplungsweg, das vom Motor erzeugte bzw. über die Kupplung übertragene Antriebsmoment und weitere Parameter ausgewertet werden müssen und über die Steuerung in ein sinnvolles Bremsverhalten umgesetzt werden müssen.

Bei Kraftfahrzeugen, welche eine Radnabenantriebseinheit aufweisen, wird das Kraftfahrzeug, wie bereits zuvor ausgeführt, üblicherweise rein elektromotorisch angetrieben, so dass insbesondere bei derartigen Kraftfahrzeugen eine Stillstandsphase des Kraftfahrzeugs an einem Hang problematisch werden kann. Ein Schleifen der Kupplung, wie dies beim verbrennungsmotorisch betriebenen Kraftfahrzeug der Fall sein kann, ist hierbei nicht möglich. Zwar kann die Motoreinheit des Radnabenantriebs auch in der Stillstandsphase bestromt werden, jedoch ist hierbei der hohe Stromverbrauch und die starke Erwärmung des Motors nachteilig. Tritt die Stillstandsphase am Hang in Kombination mit einem Stau auf, kann dies die elektrische Restreichweite erheblich reduzieren.

D1 zeigt eine Radnabenantriebseinheit mit den Merkmalen gemäß dem Oberbegriff des Patentanspruchs 1.

Aufgabe der Erfindung ist es, eine Radnabenantriebseinheit zur Verfügung zu stellen, bei welcher eine energieeffizientere Bremskraftwirkung erzielbar ist.

Die Lösung der Aufgabe erfolgt erfindungsgemäß durch die Merkmale des Anspruchs 1. Vorteilhafte Ausgestaltungen sind in den Unteransprüchen angegeben.

Die erfindungsgemäße Radnabenantriebseinheit zum Antreiben eines Fahrzeugrades eines Kraftfahrzeuges weist einen Radnabenantrieb auf, welcher ein Lagerelement aufweist, über welches der Radnabenmotor an einer Radnabe des Kraftfahrzeuges angeordnet ist. Die Erfindung zeichnet sich dadurch aus, dass der Radnabenantrieb ein mechanisch ausgebildetes Sperrelement zur Aufbringung einer Bremskraft auf die Radnabe auf weist.

Mittels des mechanisch ausgebildeten Sperrelements ist es möglich, eine mechanische Zusatzfunktion in den Radnabenantrieb zu integrieren, welche als Berganfahrhilfe oder aber auch als Parkbremse genutzt werden kann. Mittels des mechanisch ausgebildeten Sperrelements ist es möglich, eine Bremskraft auf die Radnabe aufzubringen, ohne dass der Stromverbrauch der Motoreinheit des Radnabenantriebs erhöht wird und ohne dass eine erhöhte bzw. verstärkte Erwärmung der Motoreinheit des Radnabenantriebs erfolgt. Es ist somit möglich, möglichst schonend eine Stillstandsphase an einem Hang auch in Kombination mit einem Stau für das Kraftfahrzeug und für die Radnabenantriebseinheit zu realisieren. Dadurch, dass das Sperrelement mechanisch ausgebildet ist, ist keine aufwändige Ausbildung des Sperrelements, wie beispielsweise das Vorsehen des Sperrelements mit einer aufwändigen Steuerung, erforderlich. Damit entfällt auch das Vorsehen aufwändiger Algorithmen, welche von einer Auswerteeinheit zunächst ausgewertet werden müssten, um diese dann an eine sonst übliche Steuerung weiterzugeben, um überhaupt eine Bremswirkung auslösen zu können. Die Bremskraft wird vorzugsweise durch das Sperrelement mittelbar auf die Radnabe aufgebracht.

Erfindungsgemäß ist es vorgesehen, dass zur Aufbringung der Bremskraft das Sperrelement radial und/oder axial zur Rotationsachse der Radnabe auf eine Oberfläche des Lagerelements wirkt. Das Sperrelement kann dabei beispielsweise auf eine Mantelfläche eines Lageraußenringes des Lagerelements und/oder auf eine Stirnfläche des Lageraußenringes unmittelbar wirken, um mittelbar eine Bremskraft auf die Radnabe auszuüben. Dies ist vorzugsweise dann vorgesehen, wenn der Lageraußenring drehend ausgebildet ist. Beispielsweise kann die Mantelfläche des Lageraußenrings als eine Art Klemmfläche für ein Sperrelement dienen. Ebenso ist es möglich, dass die Stirnfläche des Lageraußenrings als eine funktionale Fläche für ein Sperrelement, beispielsweise in Form eines Axialsperrelements, dienen kann. Ist die Mantelfläche des Lageraußenringes konisch ausgebildet, so ist es ferner möglich, das Sperrelement in Form eines Konusringes vorzusehen, welcher axial auf die Mantelfläche geschoben werden kann, um eine Bremskraft auf das Lagerelement aufzubringen. Ferner wäre es auch möglich, dass die Mantelfläche des Lageraußenrings mit einer Kontur versehen ist, in welche das Sperrelement eingreifen kann, beispielsweise indem das Sperrelement in Form von Bremsnocken ausgebildet ist, welche in die Kontur der Mantelfläche eingreifen können und damit eine Bremskraft erzeugen können. Diese Bremsnocken können sowohl symmetrisch oder auch unsymmetrisch ausgeführt sein, so dass sie einen Freilaufeffekt, das heißt ein richtungsselektives Bremsen, ermöglichen. Wird das Sperrelement im Bereich des Lagerelements angeordnet, so kann der das Sperrelement aufweisende Radnabenantrieb besonders kompakt ausgestaltet sein.

Weiter ist es bevorzugt vorgesehen, dass das Sperrelement elektromotorisch, elektromagnetisch und/oder mechanisch betätigbar ist. Ist das Sperrelement elektromotorisch ausgebildet, kann ein besonders hoher Wirkungsgrad erzielt werden. Ist das Sperrelement mechanisch betätigbar, so sind ein besonders einfacher Aufbau und eine leichte Handhabung möglich.

Das Sperrelement umfasst nach einer weiter vorteilhaften Ausgestaltung der Erfindung einen Freilauf. Ein Freilauf, auch als richtungsgeschaltete Kupplung bezeichnet, weist eine Welle und einen Außenring auf, wobei die Welle auch als Innenring ausgebildet sein kann. Zwischen der Welle und dem Außenring sind Rastelemente angeordnet, die eine Drehung der Welle gegenüber dem Außenring in einer Richtung, der sogenannten Freilaufrichtung zulassen und gegen eine Drehung der Welle gegenüber dem Außenring in umgekehrter Richtung, der sogenannten Sperrrichtung, sperren können.

Ist der Freilauf als ein mechanischer Freilauf ausgebildet, ist es möglich, dass die Steuerung des Antriebsmotors einen Vortrieb aufbauen kann, ohne sich mit dem Bremsmanagement abstimmen zu müssen.

Der Freilauf kann ferner beispielsweise als ein schaltbarer Freilauf ausgebildet sein. Bei einem schaltbaren Freilauf können die Rastelemente in eine Abschaltstellung gebracht werden, in der sie außer Funktion sind, das heißt, dass sie in keiner Richtung gegen eine Drehung der Welle gegenüber dem Außenring sperren können. In der Abschaltstellung ist die Welle in beiden Richtungen gegenüber dem Außenring drehbar. In einer Einschaltstellung hat ein schaltbarer Freilauf die übliche Funktion eines Freilaufs in Form einer Drehbarkeit der Welle gegenüber dem Außenring in einer Richtung und einer Sperrung gegen eine Drehung in umgekehrter Richtung. Weiter ist es möglich, dass der Freilauf als eine Schlingwandkupplung, eine Schlingwandfeder oder eine Schlingfederkupplung ausgebildet ist. Eine Schlingfederkupplung besteht üblicherweise aus einer auf eine Welle oder einen zylindrischen Körper gewickelten Schraubenfeder, die einseitig am Antrieb befestigt ist. Der Mitnahmeeffekt beruht darauf, dass sich das Mitnahmemoment mit jeder Windung aufgrund der Reibung verstärkt und summiert. Dadurch kann sich aufgrund der Umschlingung zugleich die diese Reibung verursachende Kraft vergrößern. In Gegenrichtung tritt eine geringere Reibung auf, die Feder vergrößert etwas ihren Durchmesser wickelt sich jedoch nicht ab.

Weiter ist es möglich, dass der Freilauf als ein Klemmkörperfreilauf ausgebildet ist. Der Vorteil der Verwendung eines Klemmkörperfreilaufs ist die geringe Massenträgheit der Klemmkörper bei gleichzeitiger Vergrößerung der Auflagefläche. Damit können bei geringen Reaktionszeiten hohe Drehmomente aufgefangen werden.

Weiter ist es auch möglich, dass der Freilauf als eine Anti-Hopping-Kupplung, eine Klauenkupplung oder eine konische Kupplung ausgebildet ist.

Gemäß einer weiter vorteilhaften Ausgestaltung der Erfindung ist es ferner bevorzugt vorgesehen, dass ein erster Freilauf und ein zweiter Freilauf vorgesehen sind, wobei der erste Freilauf und der zweite Freilauf über eine Umschaltklaue getrennt voneinander aktivierbar sind. Dadurch ist es möglich, jeweils für Bergauffahrten wie auch für Bergabfahrten eine Berganfahrhilfe zur Verfügung zu stellen.

Ferner betrifft die Erfindung ein Kraftfahrzeug, insbesondere ein Elektrokraftfahrzeug, umfassend eine wie vorstehend aus- und weitergebildete Radnabenantriebseinheit. Nachfolgend wird die Erfindung unter Bezugnahme auf die anliegenden Zeichnungen anhand bevorzugter Ausführungsbeispiele näher erläutert.

Es zeigen:
- Fig. 1: eine schematische Darstellung einer erfindungsgemäßen Radnabenantriebseinheit mit möglichen Positionen eines erfindungsgemäßen Sperrelements;
- Fig. 2: eine schematische Darstellung einer ersten Ausführungsform des erfindungsgemäßen Sperrelements;
- Fig. 3: eine schematische Darstellung einer zweiten Aus-führungsform des erfindungsgemäßen Sperrelements; und
- Fig. 4: eine schematische Darstellung einer dritten Ausführungsform des erfindungsgemäßen Sperrelements.

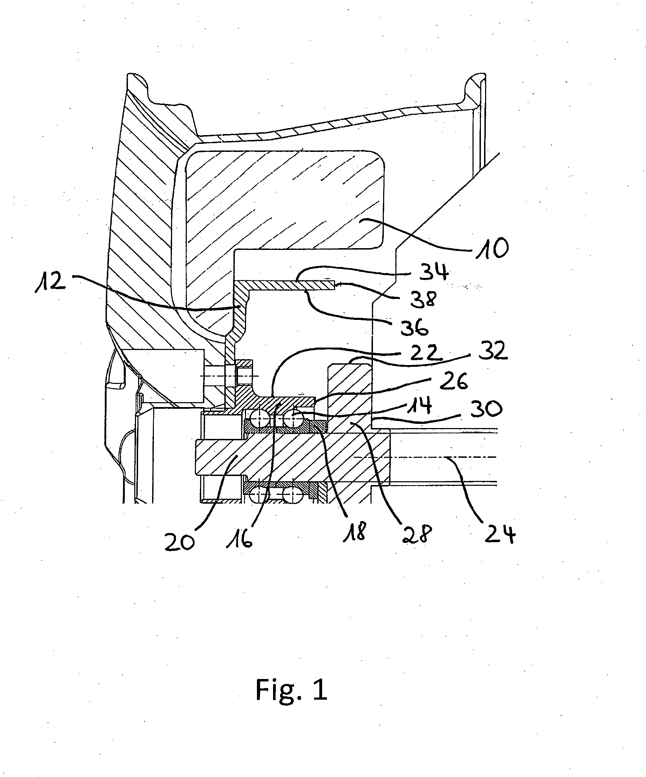

Fig. 1 zeigt eine erfindungsgemäße Radnabenantriebseinheit mit einem Radnabenantrieb, welcher eine Motoreinheit 10 und eine Bremstrommel 12 aufweist. Der Radnabenantrieb ist über ein Lagerelement 14, welches einen Lageraußenring 16 und einen Lagerinnenring 18 aufweist, an einer Radnabe 20 befestigt. Das erfindungsgemäße mechanisch ausgebildete Sperrelement, hier nicht gezeigt, kann beispielsweise an der Mantelfläche 22 des Lageraußenrings 16 vorgesehen sein, so dass das Sperrelement dann eine Bremskraft axial zur Rotationsachse 24 der Radnabe 20 auf die Mantelfläche 22 des Lageraußenrings 16 aufbringen kann. Ferner ist es möglich, das Sperrelement an der Stirnfläche 26 des Lageraußenrings 16 vorzusehen, so dass das Sperrelement radial zur Rotationsachse 24 der Radnabe 20 auf die Stirnfläche 26 des Lageraußenrings 16 wirken kann, um eine Bremskraft auf den Lageraußenring 16 und damit auf die Radnabe 20 aufbringen zu können. Die Anordnung des Sperrelements an dem Lageraußenring 16 ist vorzugsweise dann vorgesehen, wenn der Lageraußenring 16 drehbar ausgebildet ist.

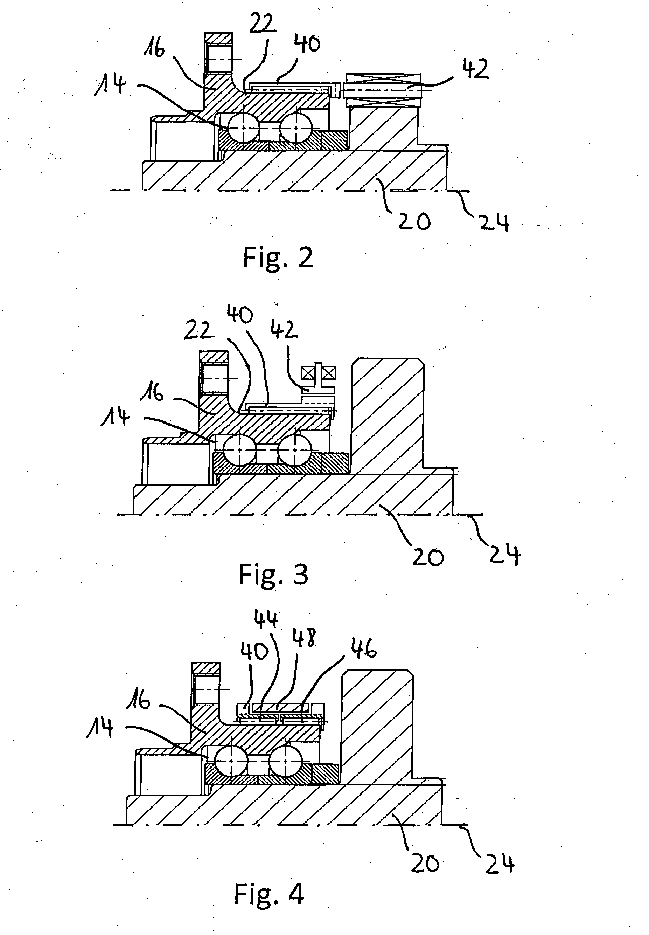

Fig. 2 zeigt eine schematische Darstellung einer ersten möglichen Ausführungsform des erfindungsgemäßen Sperrelements, bei welcher ein als ein Freilauf ausgebildetes Sperrelement 40 an der Mantelfläche 22 des Lageraußenrings 16 angeordnet ist. Hierbei ist der Freilauf als ein Hülsenfreilauf dargestellt, der von der Radträgerseite aus von einer elektromagnetisch betätigten Sperre 42 arretiert werden kann. Die Aufbringung der Bremskraft erfolgt hierbei axial zur Rotationsachse 24 der Radnabe 20.

Fig. 3 zeigt eine weitere mögliche Ausführungsform des erfindungsgemäßen Sperrelements, bei welchem das Sperrelement 40 ebenfalls als ein Freilauf in Form eines Hülsenfreilaufs ausgebildet ist, wobei hierbei eine Sperre 42 radial zur Rotationsachse 24 der Radnabe 20 auf das Sperrelement 40 wirkt, um eine Bremskraft unmittelbar aus die Mantelfläche 22 des Lageraußenringes 16 und damit mittelbar auf die Radnabe 20 zu erzeugen. Die Sperre 42 ist hierbei über Rampen und eine Federbelastung derart ausgeführt, dass sie bei Überlast überspringen kann.

Fig. 4 zeigt schematisch eine dritte mögliche Ausführungsform des erfindungsgemäßen Sperrelements, wobei hierbei das Sperrelement 40 zwei Freiläufe, einen ersten Freilauf 44 und einen zweiten Freilauf 46, aufweist, welche parallel zueinander bzw. hintereinander auf der Mantelfläche 22 des Lageraußenrings 16 vorgesehen sind, wobei die beiden Freiläufe 44, 46 über eine Umschaltklaue 48 unabhängig voneinander aktiviert werden können. Dadurch ist es möglich, jeweils für Bergauffahrten als auch für Bergabfahrten eine Berganfahrhilfe zur Verfügung zu stellen. Die Aufbringung der Bremskraft unmittelbar auf die Mantelfläche 22 des Lageraußenringes 16 und mittelbar auf die Radnabe 20 erfolgt hierbei radial zur Rotationsachse 24 der Radnabe 22.

In einem deaktivierten Zustand ist das Sperrelement 40 vorzugsweise derart abgekoppelt, dass kein Reibmoment und damit keine Bremskraft an dem Fahrzeugrad erzeugt wird. In einem aktivierten Zustand läuft das vorzugsweise als Freilauf ausgebildete Sperrelement 40 in einer Freilauffunktion mit und sperrt in dem Moment, wenn das Kraftfahrzeug vom Stillstand aus beginnt in Sperrrichtung zu rollen. In diesem gesperrten Zustand ist es möglich, durch ein Entkoppeln das Sperrelement 40 und damit die Sperrwirkung des Sperrelements 40 bzw. die Bremskraftwirkung des Sperrelements 40 aufzuheben. Dies ist zum Beispiel in dem Fall erforderlich, wenn der Fahrer am Berg mit aktivem System anhält und sich entscheidet, rückwärts zu fahren. Ebenso kann der Fall eintreten, dass das Kraftfahrzeug am Gefälle geparkt ist und die Berganfahrhilfe als Parksperre nutzt und zur Weiterfahrt zunächst rückwärts rollen möchte. Hier kommt die Aufhebung der Sperrfunktion des Sperrelements 40 dem Lösen einer Parkbremse gleich.

Diese erfindungsgemäße Radnabenantriebseinheit mit einem mechanisch ausgebildeten Sperrelement 40 zur Erzielung einer Bremskraftwirkung wird vorzugsweise in Elektrofahrzeugen eingesetzt.

### Bezugszeichenliste

- 10: Motoreinheit
- 12: Bremstrommel
- 14: Lagerelement
- 16: Lageraußenring
- 18: Lagerinnenring
- 20: Radnabe
- 22: Mantelfläche
- 24: Rotationsachse
- 26: Stirnfläche
- 28: Flanschzapfen
- 30: Mantelfläche
- 32: Stirnfläche
- 34: äußere Mantelfläche
- 36: innere Mantelfläche
- 38: Stirnfläche
- 40: Sperrelement
- 42: Sperre
- 44: Freilauf
- 46: Freilauf
- 48: Umschaltklaue

## Patentansprüche

1. Radnabenantriebseinheit zum Antreiben eines Fahrzeugrades eines Kraftfahrzeuges, umfassend einen Radnabenantrieb, der ein Lagerelement (14) aufweist, über das der Radnabenantrieb an einer Radnabe (20) des Kraftfahrzeuges angeordnet ist, wobei der Radnabenantrieb ein mechanisch ausgebildetes Sperrelement (40) zur Aufbringung einer Bremskraft auf die Radnabe (20) aufweist,
**dadurch gekennzeichnet, dass**
zur Aufbringung der Bremskraft das Sperrelement (40) radial und/oder axial zur Rotationsachse (24) der Radnabe (20) auf eine Oberfläche (34, 36, 38) einer an dem Radnabenantrieb vorgesehenen Bremstrommel (12) wirkt.

2. Radnabenantriebseinheit nach Anspruch 1, **dadurch gekennzeichnet, dass** das Sperrelement (40) elektromotorisch, elektromagnetisch und/oder mechanisch betätigbar ist.

3. Radnabenantriebseinheit nach einem der Ansprüche 1 oder 2, **dadurch gekennzeichnet, dass** das Sperrelement (40) einen Freilauf umfasst.

4. Radnabenantriebseinheit nach Anspruch 3, **dadurch gekennzeichnet, dass** ein erster Freilauf (44) und ein zweiter Freilauf (46) vorgesehen ist, wobei der erste Freilauf (44) und der zweite Freilauf (46) über eine Umschaltklaue (48) getrennt voneinander aktivierbar sind.

5. Elektrokraftfahrzeug umfassend eine Radnabenantriebseinheit nach einem der Ansprüche 1 bis 4.
